(19) Europäisches Patentamt
European Patent Office
Office européen des brevets

(11) Veröffentlichungsnummer: **0 161 547**
**B1**

(12) **EUROPÄISCHE PATENTSCHRIFT**

(45) Veröffentlichungstag der Patentschrift: **31.10.90**

(51) Int. Cl.[5]: **C 07 B 57/00,** C 08 G 73/02, B 01 D 15/08

(21) Anmeldenummer: **85104915.5**

(22) Anmeldetag: **23.04.85**

(54) **Neue, optisch aktive Polymere für die chromatographische Racemattrennung.**

(30) Priorität: **18.05.84 DE 3418525**

(43) Veröffentlichungstag der Anmeldung:
**21.11.85 Patentblatt 85/47**

(45) Bekanntmachung des Hinweises auf die Patenterteilung:
**31.10.90 Patentblatt 90/44**

(84) Benannte Vertragsstaaten:
**BE DE FR GB NL**

(56) Entgegenhaltungen:

**Keine Entgegenhaltungen.**

(73) Patentinhaber: **BASF Aktiengesellschaft**
**Carl-Bosch-Strasse 38**
**D-6700 Ludwigshafen (DE)**

(72) Erfinder: **Schmidt, Peter, Dr.**
**Suedtiroler Ring 28**
**D-6719 Weisenheim (DE)**
Erfinder: **Bott, Kaspar, Dr.**
**Rieslingweg 4**
**D-6706 Wachenheim (DE)**

**EP 0 161 547 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

## Beschreibung

Die Erfindung betrifft optisch aktive Polymerisate mit Chiralitätszentren in der Hauptkette und deren Verwendung als Trennmedium zur chromatographischen Auftrennung von racemischen Gemischen.

Bei derartigen Polymerisaten handelt es sich um optisch aktive Stoffe, durch Polymerisation von entsprechenden optisch aktiven organischen Monomeren hergestellt werden, und die in Lösung die Ebene des linear polarisierten Lichts drehen.

Es ist bereits bekannt, optisch aktive Polymerisate durch Polymerisation der entsprechenden Monomeren herzustellen und die erhaltenen optisch aktiven Polymerisate als Adsorbentien zur Trennung von racemischen Gemischen in die optischen Antipoden zu verwenden (vgl. DE—OS 25 00523, DE—OS 18 07497, EP—A1—68290 und "Angewandte Chemi" *92* (1980), Seiten 14 bis 25. Bei derartigen Substanzen handelt es sich um optisch aktive Polymerisate von Methacrylsäureestern, Acryl- und Methacrylsäureamiden oder Poly (β-amide). Die Herstellung der bekannten optisch aktiven Polymerisate ist zum Teil recht aufwendig, so daß sich eine technische Verwendung erübrigt. Ein weiterer Nachteil der bekannten optisch aktiven Polymerisate ist die Tatsache, daß nur bei wenigen eine Anreicherung von optisch aktiven Enantiomeren erfolgreich war.

Aufgabe der vorliegenden Erfindung war es daher, opitsch aktive Polymerisate zu schaffen, die leicht herstellbar sind, eine hohe Trennwirkung auf racemische Gemische besitzen und leicht verarbeitbar sind.

Diese Aufgaben wurden gelöst durch optisch aktive Polymerisate mit spezifischen Drehwerten [$\alpha^{20}$], gemessen in Methylenchloridlösung, zwischen −200 und +200° und Molekulargewichten aus dem Zahlemittel zwischen 2 000 und 2 000 000, welche als charakteristische Struktureinheit die Gruppierung der allgemeinen Formel (I)

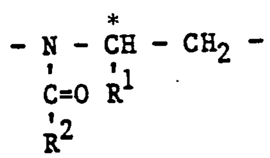

I

enhalten, worin $R^1$ ein gegebenenfalls substituierter $C_1$- bis $C_{18}$-Alkyl oder $C_5$- bis $C_8$-Cycloalkylrest und $R^2$ ein gegebenenfalls substituierter $C_1$- bis $C_{18}$-Alkyl- oder Alkylenrest, $C_6$- bis $C_{12}$-Aryl- oder Arylenrest oder ein $C_5$- bis $C_8$-Cycloalkyl- oder Cycloalkylenrest bedeutet und * das Chiralitätszentrum bezeichnet.

Bevorzgt sind auch Polymerisate, in denen die gegebenenfalls vorhandenen Substituenten $C_1$- bis $C_{18}$-Alkyl-, $C_1$- bis $C_6$-Alkoxy, Halogen, Nitro, $C_2$- bis $C_{12}$-Acyloxy, $C_1$- bis $C_6$-Alkylmercapto- oder $C_6$- bis $C_{12}$-Arylgruppen sind.

Polymerisate, welche die allgemeine Formel

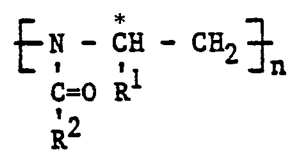

aufweisen, worin n eine ganze Zahl zwischen 10 und 1000 ist, sind besonders bevorzugt.

Unter optisch aktiven Polymerisaten werden organische Polymere verstanden, die in Lösung die Ebene des polarisierten Lichtes drehen. Die erfindungsgemäßen optisch aktiven Polymerisate weisen Molekulargewichte aus dem Zahlenmittel zwischen 2000 und 2.000.000, bevorzugt zwischen 3000 und 200.000 auf, bestimmt nach der osmometrischen Methode, die im Fortschrittsbericht der Hochpolymerenforschung *11* (1973), Seiten 111ff, beschrieben ist. Die Polymerisate können als vernetzte Substanzen vorliegen, um die Verarbeitbarkeit zu verbessern.

Die erfindungsgemäßen Polymerisate weisen Chiralitätszentren in der Hauptkette auf. Diese ist, gemäß Formel I, durch Einbau des asymetrischen C-Atoms in der Hauptkette gewährleistet.

Die Polymerisate, welche Strukturelemente der allgemeinen Formel (I) aufweisen, sind an sich bekannt, aber nur in der nicht optisch aktiven Form (vgl. z.B. BE—PS 707 623, DE—AS 12 63 300, FR—PS 15 68 108, DE—OS 24 27 938, GB—PS 10 92 605 u.a.). Sie werden durch Polymerisation der entsprechenden Oxazoline unter Einwirkung von Wärme und/oder saurer Katalysatoren wie Methyl-p-toluolsulfonat oder 20 gew.%iges Oleum hergestellt nach dem Reaktionsschema:

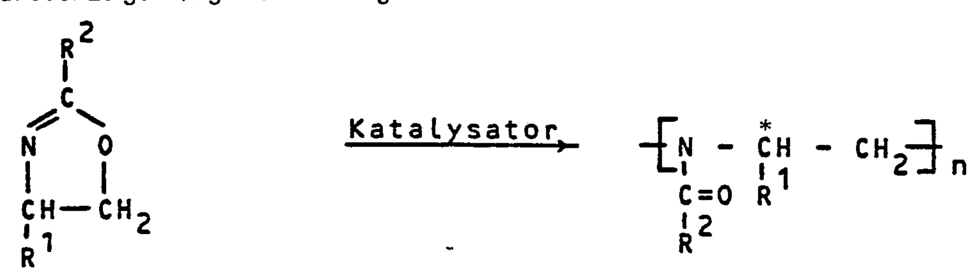

wobei $R^1$ und $R^2$ die oben aufgeführte Bedeutung aufweisen [vgl. "Journal of Polymer Science" Part A-1, *6* (1968), 57 bis 62]. Die vernetzten Polymerisate der allgemeinen Strukturformel (I) können durch Copolymerisation mit bifunktionellen Oxazolinen oder aus bifunktionellen Oxazolinen selbst gewonnen werden.

Die optisch aktiven Polymerisate der Formel (I), Poly-N-acylalkylenimine genannt, lassen sich durch analoge Polymerisation der entsprechend optisch aktiven Oxazoline mit Hilfe geeigneter Katalysatoren herstellen. Die optisch aktiven Oxazoline werden erhalten aus den optisch aktiven Aminoalkoholen der allgemeinen Formel:

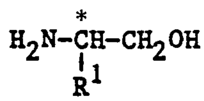

wobei $R^1$ die eingangs aufgeführte Bedeutung hat. Diese Amine können nach Verfahren, wie sie für die racemischen Verbindungen beschrieben sind, entweder mit Nitrilen der allgemeinen Formel $R^2—C{\equiv}N$ kondensiert werden (vgl. "Liebigs Annalen der Chemie" *1979*, Seiten 986 bis 996) oder durch Umsetzung mit Säurechloriden der allgemeinen Formel:

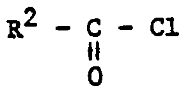

mit Thionylchlorid in das β-Chloramid:

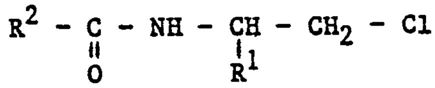

und Cyclisierung mit Kaliumhydroxid hergestellt werden [vgl. Journal of Polymer Science" Part A-1" *6* (1967), Seiten 57 bis 62]. Die als Ausgangsmaterial eingesetzten optisch aktiven Aminoalkohole sind nach bekannten Verfahren, z.B. durch klassische Racemattrennung über Salze optisch aktiver Säuren oder durch Reduktion optisch aktiver Aminosäuren zugänglich.

Die spezifischen Drehwerte [$\alpha_D^{20}$] der optisch aktiven Polymerisate liegen, gemessen in Methylenchloridlösung, zwischen −200 und +200°, bevorzugt zwischen −10 und −150 bzw. +10 und +150° und sind ungleich null. Die optische Drehung wurde gemessen mit einem handelsüblichen Polarimeter. Unter spezifischem Drehwert [$\alpha_D^{20}$] wird der Drehwert α in Grad verstanden, den 1 g Substanz in 1 ml Lösung in einem Rohr von 10 cm Länge bewirkt, wobei die Temperatur 20°C und die Wellenlänge des Lichts 589 nm beträgt.

Bevorzugt sind Polymerisate der allgemeinen Formel $-[I]-_n$, wobei n = 10 bis 1000. Diese Homopolymerisate sind nicht vernetzt und analog, wie oben beschrieben, aus den entsprechenden optisch aktiven Oxazolinen herstellbar.

Die mit der Erfindung erzielten Vorteile sind insbesondere darin zu sehen, daß die optisch aktiven Polymerisate der allgemeinen Formel (I) geeignet sind, eine große Zahl racemischer Verbindungen in die Enantiomeren zu trennen oder anzutrennen, vor allem auch solche, deren Trennung mit den bisher bekannten optisch aktiven Trennmedien nicht gelang. So konnten z.B. mit einem Polymeren (I) mit $R^1$ = Ethyl und $R^2$ = Phenyl folgende als Racemate eingesetzte Verbindungen ganz oder teilweise in die Enantiomeren zerlegt werden: Acetoin, Mandelsäuremethylester, 2-Chlor-4-methylphenoxy-propionsäuremethylester, Benzoinisopropylether, 3-(3,5-Dichlorphenyl)-5-ethenyl-5-methyl-2,4-oxazolidindion, Phenoxypropionsäuremethylester, O-Ethyl-S-propyl-O-(4-fluor-2-bromphenyl)-thiophosphat, O-Ethyl-S-propyl-S-propargyl-dithiophosphat, 3-)3,5-Dichlorphenyl)-5-methoxymethyl-5-methyl-2,4-oxazolidindion.

Für die Verwendung der Polymeren als Trenmedien müssen die Polymerisat (I) durch Mahlen, Zerreiben oder ähnliche Verfahren zerkleinert und anschließend durch Sieben, Windsichten, Sedimentieren und ähnliches klassifiziert werden. Geeignet sind alle Korngrößenverteilungen, wie sie in der Säulenchromatographie Anwendung finden, z.B. 100 bis 50 µm, 50 bis 30 µm oder 30 bis 20 µm. Je kleiner die Korngröße und je enger die Verteilung umso höher ist die Trennwirkung des Materials. Die Trennung des zu trennenden Racemats kann so erfolgen, daß das als stationäre Phase dienende Polymer-Pulver in eine Säule geeigneter Größe gefüllt wird und die Substanz langsam mit einem geeigneten Lösungsmittel oder Lösungsmittelgemisch als mobile Phase aus der Säule eluiert wird. Dabei kann, abhängig von der geprüften Verbindung, eine mehr oder weniger starke Trennung in die optisch aktiven Enantiomeren eintreten, die mit Hilfe geeigneter Detektoren, z.B. UV-Detektor oder Polarimeter-Detektor, sichtbar gemacht werden kann.

## Herstellung von Ausgangsverbindungen

(S)-2-Phenyl-4-ethyloxazolin

89 g (S)-2-Aminobutanol-1 wurden in 2 l Ether gelöst und unter Eiskühlung 140 g Benzoylchlorid in 750

ml Ether zugetropft. Die ausgefallenen Kristalle wurden abgesaugt, mit Wasser gründlich gewaschen und getrocknet. Ausbeute: 103 g (S)-2-N-Benzoylaminobutanol-1, Fp. 101—103°C; $[\alpha_D^{20}]$ + 43,0° ($CH_2Cl_2$).

96 g dieses Produkts wurden in 75 ml Thionylchlorid eigentragen, das auf 0°C gekühlt war. Nach Zugabe von 200 ml Toluol wurde eingedampft und der kristalline Rückstand aus Toluol/Cyclohexan umkristallisiert. Ausbeute: 99 g (S)-2-N-Benzoylaminobutylchlorid-1; Fp. 109—110°C; $[\alpha_D^{20}]$ + 62,5° ($CH_2Cl_2$).

95 g dieser Verbindung wurden in 500 ml Ethanol auf 50° erwärmt und eine Lösung von 25 g KOH in 150 ml Ethanol zugefügt. Das ausgefallene Kaliumchlorid wurde abgesaugt und das Filtrat eingedampft und der Rückstand im Vakuum destilliert. Ausbeute an (S)-2-Phenyl-4-ethyloxazolin 54 g; Kp 85°/0,7 mbar $[\alpha_D^{20}]$ + 84,5° ($CH_2Cl_2$).

(S)-2-Pentadecyl-4-ethyloxazolin

Nach dem gleichen Syntheseschema wurde, ausgehend von (S)-2-Aminobutanol-1 und Palmitinsäurechlorid (S)-2-Pentadecyl-4-ethyloxazolin hergestellt.

| Verbindung | Ausbeute | Fp | $[\alpha_D^{20}]$ ($CHCl_3$) |
|---|---|---|---|
| 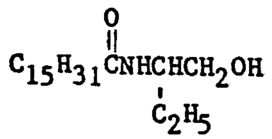 | 90 % | 100–101,5° | + 26,0° |
| 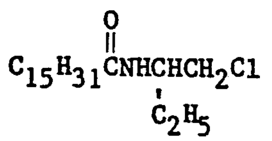 | 90 % | 76– 79,5° | + 39,9° |
| 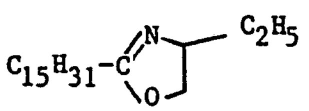 | 50 % | 31– 33° | + 40,0° |

Polymerisation

Polymerisation von (S)-2-Phenyl-4-ethyloxazolin

50 g (S)-2-Phenyl-4-ethyloxazolin wurden mit 1 ml o-Toluolsulfonsäuremethylester versetzt und 24 Stunden auf 160°C erhitzt. Es entstand eine bernsteinfarbige, spröde Masse, die zerkleinert und gesiebt wurde. $[\alpha_D^{20}] = -36°$ ($CH_2Cl_2$).

Polymerisation von (S)-2-Pentadecyl-4-ethyloxazolin

10 g (S)-2-Pentadecyl-4-ethyloxazolin wurden mit 0,35 g o-Toluolsulfonsäuremethylester versetzt und 25 Stunden auf 160°C erhitzt. Die Reaktionsmasse wurde erst mit 200 ml Cyclohexan, dann mit mehreren Portionen Ether behandelt. Das unlösliche Polymere wurde abgesaugt. Ausbeute 3 g. $[\alpha_D^{20}] = -20°$ ($CHCl_3$).

Einsatz als Trennphase für Enantiomerentrennung

Trennung von D,L-2-Chlor-4-methyl-phenoxy-propionsäuremethylester.

Eine 70 cm lange Glassäule wurde mit einer Suspension des Poly-((S)-2-phenyl-4-ethyl-oxazolin) in Ether gefüllt, wobei die Korngröße 38 bis 45 µm betrug. Auf dieser Säule wurden 200 µl einer Lösung von 520 mg D,L-2-Chlor-4-methyl-phenoxypropionsäuremethylester in Ether gegeben und 0,08 ml Ether pro Minute durchgepumpt. Es erschienen in einem nachgeschalteten UV-Detektor zwei Signale mit Maximum bei 50 min und 60 min. Überprüfung der Fraktionen mit einem Polarimeter ergab, daß das erste Signal dem L- und das zweite Signal dem D-Produkt zugeordnet werden muß.

Unter ähnlichen Bedingungen wurden die nachfolgenden Verbindungen geprüft, wobei in diesem Fällen im UV-Detektor nur ein Signal beobachtet wurde, das jedoch in einem nachgeschalteten Durchflußpolarimeter eine Antrennung in links- und rechtsdrehende Form erkennen ließ:

D,L-Acetoin
D,L-3-(3,5-Dichlorphenyl-5-ethenyl-5-methyl-2,4-oxazolidindion)
D,L-Phenoxypropionsäuremethylester
D,L-Mandelsäuremethylester
D,L-O-Ethyl-S-propyl-O-(4-fluor-2-bromphenyl)-thiophosphat
D,L-O-Ethyl-S-propyl-S-propargyl-dithiophosphat
D,L-3-(3,5-Dichlorphenyl-5-methoxymethyl-5-methyl-2,4-oxazolidindion)

**Patentansprüche**

1. Optisch aktive Polymerisate mit spezifischen Drehwerten [$\alpha^{20}$], gemessen in Methylenchloridlösung, zwischen −200 und +200° und Molekulargewichten aus dem Zahlenmittel zwischen 2000 und 2 000 000, welche als charakteristische Struktureinheit die Gruppierung der allgemeinen Formel I

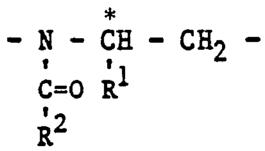

I

enthalten, worin $R^1$ eine gegebenenfalls substituierter $C_1$- bis $C_{18}$-Alkyl- oder $C_5$- bis $C_8$-Cycloalkylrest und $R^2$ ein gegebenenfalls substituierter $C_1$- bis $C_{18}$-Alkyl- oder Alkylenrest, $C_6$- bis $C_{12}$-Aryl- oder Arylenrest oder ein $C_5$- bis $C_8$-Cycloalkyl- oder Cycloalkylenrest bedeutet und * das Chiralitätszentrum bezeichnet.

2. Polymerisate nach Anspruch 1, dadurch gekennzeichnet, daß die gegebenenfalls vorhandenen Substituenten $C_1$- bis $C_{18}$-Alkyl-, $C_1$- bis $C_6$-Alkoxy-, Halogen-, Nitro-, $C_2$- bis $C_{12}$-Acyloxy, $C_1$- bis $C_6$-Alkylmercapto oder $C_6$- bis $C_{12}$-Arylgruppen sind.

3. Polymerisate nach Anspruch 1, dadurch gekennzeichnet, daß sie die allgemeine Formel

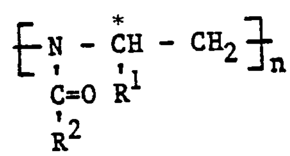

aufweisen, worin n eine ganze Zahl zwischen 10 und 1000 ist.

4. Verwendung der Polymerisate nach Anspruch 1 als Trennmedium zur chromatographischen Auftrennung von racemischen Gemischen in die entsprechenden optischen Antipoden.

**Revendications**

1. Polymères optiquement actifs ayant des pouvoirs rotatoires spécifiques [$\alpha^{20}$], mesurés dans une solution de chlorure de méthylène, comprise entre −200 et +200° et des poids moléculaires en moyenne en nombre compris entre 2000 et 2 000 000, contenant, en tant que motif structural caractéristique, le groupement de formule générale I

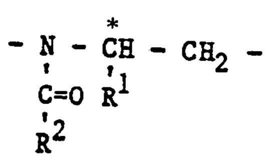

I

dans laquelle $R^1$ représente un reste alkyle en $C_1$ à $C_{18}$ ou cycloalkyle en $C_5$ à $C_8$ éventuellement substitué et $R^2$ représente un reste alkyle ou alkylène en $C_1$ à $C_{18}$ éventuellement substitué, un reste aryle ou arylène en $C_6$ à $C_{12}$ ou un reste cycloalkyle ou cycloalkylène en $C_5$ à $C_8$ et * désigne le centre de chiralité.

2. Polymères selon la revendication 1, caractérisés en ce que les substituants éventuellement présents sont des groupements alkyle en $C_1$ à $C_{18}$, alcoxy en $C_1$ à $C_6$, des atomes d'halogène, des groupements nitro, acyloxy en $C_2$ à $C_{12}$, alkylmercapto en $C_1$ à $C_6$ ou aryle en $C_6$ à $C_{12}$.

3. Polymères selon la revendication 1, caractérisés en ce qu'ils répondent à la formule générale

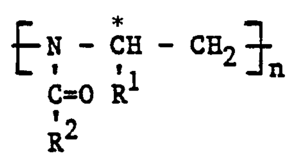

dans laquelle n est un nombre entier entre 10 et 1000.

4. Utilisation des polymères selon la revendication 1 comme agent de séparation pour la séparation chromatographique de mélanges racémiques en antipodes optiques correspondants.

**Claims**

1. An optically active polymer which has a specific rotation [$\alpha^{20}$], measured in methylene chloride solution, of from $-200$ to $+200°$ and a number average molecular weight of from 2,000 to 2,000,000 and contains as the characteristic structural unit the group of the formula (I)

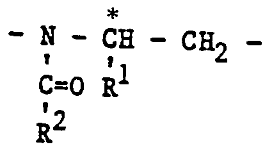

I

wherein $R^1$ is an unsubstituted or substituted $C_1$—$C_{18}$-alkyl or $C_5$—$C_8$-cycloalkyl radical and $R^2$ is an unsubstituted or substituted $C_1$—$C_{18}$-alkyl or alkylene radical, $C_6$—$C_{12}$-aryl or arylene radical or a $C_5$—$C_8$-cycloalkyl or cycloalkylene radical, and * designates the center of chirality.

2. A polymer as claimed in claim 1, wherein the substituents which may or may not be present are each $C_1$—$C_{18}$-Alkyl, $C_1$—$C_6$-alkoxy, halogen, nitro, $C_2$—$C_{12}$-acyloxy, $C_1$—$C_6$-alkylmercapto or $C_6$—$C_{12}$-aryl.

3. A polymer as claimed in claim 1, which is of the formula

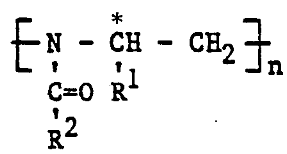

where n is an integer from 10 to 1,000.

4. Use of a polymer as claimed in claim 1, as a separation medium for the chromatographic separation of a racemic mixture into the corresponding optical antipodes.